# EUROPEAN PATENT SPECIFICATION

(11) **EP 4 341 630 B1**
(45) Date of publication and mention of the grant of the patent: **20.08.2025**
(21) Application number: 22729636.5
(22) Date of filing: 19.05.2022
(51) Int. Cl.: F28C 3/06, F28D 7/16, F28F 19/00

(54) **HEAT EXCHANGING DEVICE COMPRISING A RECIRCULATION SYSTEM AND METHOD FOR REDUCING FOULING IN A HEAT EXCHANGER**
WÄRMEAUSTAUSCHVORRICHTUNG MIT EINEM RÜCKFÜHRUNGSSYSTEM UND VERFAHREN ZUR VERMINDERUNG DER VERSCHMUTZUNG IN EINEM WÄRMETAUSCHER
DISPOSITIF D'ÉCHANGE DE CHALEUR COMPRENANT UN SYSTÈME DE RECIRCULATION ET PROCÉDÉ POUR RÉDUIRE L'ENCRASSEMENT DANS UN ÉCHANGEUR DE CHALEUR

(30) Priority: 21.05.2021 EP 21175305
(43) Date of publication of application: 27.03.2024
(73) Proprietor: Yara International ASA, 0277 Oslo (NO)
(72) Inventor: PORRO, Lino Giovanni, 1040 Etterbeek (BE); LOVIAT, Maxime, 33810 Bordeaux (FR); DORINI, Francesco, 44122 Ferrara (IT)
(74) Representative: AWA Sweden AB
(86) International application number: PCT/EP2022/063530
(87) International publication number: WO 2022/243412

(56) References cited:
- EP-A1- 1 036 787
- EP-A1- 3 476 470
- EP-A1- 3 689 433
- WO-A1-2017/013181
- WO-A1-2018/236282
- WO-A2-2010/128371
- CA-A1- 3 049 570
- US-A- 4 444 016
- US-A1- 2016 069 625

## Description

### Field of the invention

The present disclosure is related to the field of urea manufacturing, in particular to a heat exchanging device in a urea plant.

### Background of the invention

Urea is one of the most important chemicals industrially produced today, around 200 million tons of urea are produced worldwide every year. Most of it (above 90% of total production) is used as a fertilizer in agriculture as a nitrogen source. Urea is produced by reacting ammonia (NH₃) and carbon dioxide (CO₂) in a two-step process: first, two molecules of ammonia react with one molecule of carbon dioxide to form ammonium carbamate (H₂N-COONH₄); secondly, ammonium carbamate decomposes into urea and water.

The different processes in a urea plant produce a waste stream being an aqueous solution comprising water, urea, ammonia, and carbon dioxide. The aqueous solution is treated in a hydrolyzer section, also called water treatment section, to remove impurities so that the water can be re-used in the plant or safely sent to the sewage system. The aqueous solution comprising water, urea, ammonia, and carbon dioxide is first processed to separate the urea from the ammonia and carbon dioxide. An aqueous solution essentially comprising urea and a gaseous stream comprising water, ammonia, and carbon dioxide are produced. Hydrolyzer sections almost always comprise a heat exchanging device, into which the gaseous stream comprising water, ammonia and carbon dioxide is injected and cooled down to recover a liquid condensate. The heat exchanging device comprises e.g. a plurality of pipes, wherein a cooling fluid, such as water, is circulated and absorbs heat from the gaseous stream comprising water, ammonia and carbon dioxide.

Heat exchanging devices condensing a gaseous stream comprising water, ammonia and carbon dioxide can also be found in other sections of a urea plant. Such heat exchanging devices may also be found in other chemical plants.

The cooling water used in heat exchanging devices may come from different sources, such as sea, canal or river water, to which water-improving additives may be added to improve and fine tune the properties of the water. However, distilled or purified water is almost never used in heat exchangers due to high cost involved in obtaining such waters, so the cooling water retrieved from different sources almost always is a non-pure water and thus contains dissolved inorganic salts already before any additional water-improving additives may be added, e.g. when it during usage enters an heat exchanging device. Inside the heat exchanging device, the cooling water absorbs heat from the fluid to be cooled down and the temperature of the cooling water increases. But if the temperature of the cooling water reaches above 60°C, in particular above 70 °C, there is a high risk that some of the inorganic salts present in ingoing cooling water, either naturally included or provided as additives, will precipitate out of the cooling water, in particular salts which solubility in water decreases when the temperature of the water increases, such as calcium phosphate. The inorganic salts will accumulate within the heat exchanging device, i.e. on or in the cooling elements, e.g. in the pipes of a shell and tube heat exchanger. Inorganic salt accumulation inside the cooling elements will, eventually, lead to some pipes being completely blocked by fouling. This, of course, reduces the efficacy of the heat exchanger and requires repeated maintenance operations to clear the cooling elements.

EP3689433A1 (Yara, 2020) discloses a shell-and-tube stripper, which is a type of heat exchanger, and a method for removing ammonium carbamate from an aqueous solution comprising urea and ammonium carbamate. The aqueous solution comprising urea and ammonium carbamate is introduced in the distribution chamber of the stripper and guided to a plurality of tubes comprised in the main chamber, the tubes being heated with steam. In the tubes, the aqueous solution is heated up and the ammonium carbamate comprised therein breaks down into ammonia and carbon dioxide which evaporate from the aqueous solution. An aqueous urea solution depleted of ammonium carbamate is obtained in the collection chamber.

WO2017013181A1 (Sandvik, 2017) discloses a new type of stainless steel for equipment in a urea-producing plant. It describes the functioning of a conventional urea-producing plant, in particular it explains that the gaseous stream obtained from a stripper such as the one disclosed in EP3689433A1 is condensed into an aqueous solution containing ammonia and carbon dioxide is recirculated into the system. The skilled person knows that this aqueous solution is recycled back to the synthesis reactor to produce more urea.

### Summary of the invention

In order to solve or at least alleviate the problem mentioned above, it was discovered that it was possible to spray an amount of the liquid condensate recovered in the heat exchanger into the gaseous stream before the gaseous stream enters the heat exchanger.

In one aspect, the present disclosure is related to a method as defined in claim 1.

The heat exchanger may be a shell-and-tube heat exchanger, a plate heat exchanger, or a double pipe heat exchanger. The heat exchanger may comprise a distribution chamber, a main chamber and a collection chamber.

As defined in claim 1, the present disclosure is related to a method for reducing fouling of a heat exchanger in a heat exchanging device, more specifically reducing fouling of cooling elements of a heat exchanger comprising a distribution chamber, a main chamber and a collection chamber, wherein the distribution chamber comprises a gas inlet, the main chamber comprises a plurality of cooling elements, wherein each cooling element comprises an inlet and an outlet for a cooling liquid, and the collection chamber comprises at least one outlet for a liquid composition and optionally an outlet for a gas composition, the method comprising the steps of: directing a gaseous stream comprising water, ammonia and carbon dioxide in the gas inlet of the distribution chamber via a pipe; directing a cooling liquid comprising water to one or more inlets of the cooling elements and recovering the cooling liquid at one or more outlets thereof; in the main chamber, condensing the gaseous stream into a condensate; in the collection chamber, collecting the condensate from the at least one outlet for a liquid composition; and introducing a portion of the condensate as an aerosol in the pipe carrying the gaseous stream, thereby lowering the temperature thereof.

In view of the methods disclosed herein, the portion of the condensate may be essentially free of dissolved gas. The condensate recovered may be directed to a liquid/vapor separator for removal of any remaining dissolved gases, before a portion of the condensate is forwarded to the inlet pipe carrying the gaseous stream to the heat exchanger, thereby obtaining a condensate free of dissolved gas, in particular free ammonia gas and/or carbon dioxide. The temperature of the gaseous stream may be at least 110 °C, in the inlet pipe before the introduction of the portion of the condensate recovered. The temperature of the gaseous stream at the gas inlet of the heat exchanger may be below 110 °C. The temperature of the cooling liquid at the inlet of the at least one, e.g. plurality, of cooling elements may be from 20 to 30 °C. The temperature of the cooling liquid at the outlet of the plurality of cooling elements may be from 50 to 70°C, in particular from 50 to 60 °C. The condensate may be an aqueous solution comprising a compound selected from the group consisting of ammonium bicarbonate, ammonium carbonate, ammonium carbamate, or any combinations thereof. The cooling elements may comprise plates, or pipes, in particular straight pipes. The temperature of the portion of the condensate to be injected in the inlet pipe for the gaseous stream may be from 15 to 60 °C, in particular from 20 to 45 °C. The portion of the condensate may be introduced in the inlet pipe for the gaseous stream with a spraying nozzle.

In one aspect, the present disclosure is related to a heat exchanging device as defined in claim 11.

In view of the heat exchanging devices disclosed herein, the heat exchanging device may further comprise a liquid/vapor separator. The liquid/vapor separator is positioned after the heat exchanger. The liquid/vapor separator is adapted to receive all condensate leaving the heat exchanger or only a portion therefrom to be recycled and injected into the inlet pipe for the gaseous stream. The liquid/vapor separator may comprise an inlet for an aqueous solution, e.g. the condensate leaving the heat exchanger, a gas outlet, and an outlet for a liquid composition depleted of gas, in particular free ammonia and/or carbon dioxide. The outlet for a liquid composition depleted of gas is fluidly connected to the inlet pipe of the gaseous stream, and to the means for generating an aerosol between the at least one outlet for a liquid composition and the inlet pipe of the gaseous stream. The at least one outlet for a liquid composition from the heat exchanger, e.g. from a collection chamber of a heat exchanger, is fluidly connected to the inlet for an aqueous solution of the liquid/vapor separator, and the outlet for a liquid composition of the liquid/vapor separator is fluidly connected to the means for generating an aerosol.
In another aspect, the present disclosure provides a method for modifying a heat exchanger comprising a distribution chamber, a main chamber and a collection chamber, wherein the distribution chamber comprises a gas inlet, the main chamber comprises a plurality of cooling elements, wherein each cooling element comprises an inlet and an outlet for a cooling liquid, the collection chamber comprises at least one outlet for a liquid composition; and an inlet pipe is fluidly connected to the gas inlet of the heat exchanger, comprising the step of fluidly connecting the at least one outlet for a liquid composition of the collection chamber with the inlet pipe connected to the gas inlet of the distribution chamber with a fluid connection wherein the fluid connection comprises a means for generating an aerosol, and the fluid connection is configured to introduce at least a portion of the liquid composition from the collection chamber as an aerosol in the inlet pipe, thereby obtaining a heat exchanger according to claim 13.

In another aspect, the present disclosure provides a method as defined in claim 14 for modifying a system comprising a heat exchanging device including a heat exchanger and a liquid/vapor separator, the heat exchanger comprising a distribution chamber, a main chamber and a collection chamber, wherein the distribution chamber comprises a gas inlet, the main chamber comprises a plurality of cooling elements, wherein each cooling element comprises an inlet and an outlet for a cooling liquid, the collection chamber comprises at least one outlet for a liquid composition; and an inlet pipe is fluidly connected to the gas inlet of the heat exchanger, wherein the liquid/vapor separator comprises a liquid inlet, a gas outlet and a liquid outlet, the at least one outlet for a liquid composition of the heat exchanger being connected to the liquid inlet of the liquid/vapor separator, the method comprising the step of fluidly connecting the liquid outlet of the liquid/vapor separator with the inlet pipe connected to a gas inlet of the heat exchanger with a fluid connection, wherein the fluid connection comprises a means for generating an aerosol, and the fluid connection is configured to introduce at least a portion of the liquid composition from the liquid outlet of the liquid/vapor separator as an aerosol in the inlet pipe. The present method and heat exchanging device with heat exchanger and fluidly connected recirculation may be used in a urea plant.

### Brief description of the figures

The following description of the figure of a specific embodiment of a system according to the present disclosure is only given by way of example and is not intended to limit the present explanation, its application or use. In the figures, identical reference numerals refer to the same or similar parts and features.
Figure 1 represents a conventional heat exchanger.
Figure 2 represents an embodiment of heat exchanging device comprising a recirculation system according to the present disclosure.
Figure 3 represents an embodiment of the method according to the present disclosure.

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "an outlet" refers to one or more than one outlet.

"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight percent", "%wt" or "weight%", here and throughout the description unless otherwise defined, refers to the relative weight of the respective component based on the overall weight of the formulation.

The scope of the present invention is in accordance with the appended claims.

In one aspect, the present disclosure is related to a method for reducing fouling of the cooling elements of a heat exchanging device comprising a distribution chamber, a main chamber and a collection chamber, e.g. in a urea plant, wherein the distribution chamber comprises a gas inlet, the main chamber comprises a plurality of cooling elements, wherein each cooling element comprises an inlet and an outlet for a cooling liquid, and the collection chamber comprises at least one outlet for a liquid composition, and optionally an outlet for a gas composition, which gas composition comprises non-condensed components, the method comprising the steps of: directing a gaseous stream comprising water, ammonia and carbon dioxide in the gas inlet of the distribution chamber via a pipe; directing a cooling liquid comprising water to one or more inlets of the cooling elements and recovering the cooling liquid at one or more outlets thereof; in the main chamber, condensing the gaseous stream into a condensate; in the collection chamber, collecting the condensate from the at least one outlet for a liquid composition; and introducing a portion of the condensate from the at least one outlet for a liquid composition as an aerosol in the pipe carrying the gaseous stream comprising water, ammonia and carbon dioxide to the gas inlet of the heat exchanging device, thereby lowering the temperature thereof.

Within the scope of this disclosure, a heat exchanging device comprises a heat exchanger, wherein a heat exchanger may have different designs, such as a shell-and-tube heat exchanger, a plate heat exchanger, or a double pipe heat exchanger.

A heat exchanger refers herein to a device that is configured to receive a gaseous stream, in particular comprising water, and to condense the gaseous stream into a liquid condensate, in particular an aqueous solution.

In the following, the method of the invention will be explained by referring to a heat exchanger of the type shell and tube design, which herein after is contemplated as a flow chart of the method. Other, the general flow chart of the method may be applied also to other types of heat exchanges such as plate, or double pipe heat exchangers.

Heat exchangers of the type shell-and-tube are well known in the field and refers to a device that comprises a plurality of tubes encased in a shell. The present disclosure describes the case where the cooling liquid is directed to the inside of the tubes of the device, and the gaseous stream is directed to the shell side of the device. However, the present invention may also be applied to the case where the cooling liquid is directed to the shell side of the device, and the gaseous stream is directed to the tubes. In such a case, the tubes cannot be blocked or fouled but heat transfer may be significantly decreased. However, applying the same method as described herein will decrease the precipitation of solids in the shell side which is also highly desirable.

Gaseous streams containing compounds with a boiling point of or below 100 °C, such as water, may be injected into a heat exchanger where they are brought in contact with cooling elements containing a cooling liquid. Upon contact, the cooling liquid absorbs heat from the gaseous stream and lowers the temperature of the stream. This causes the volatile compounds of the gaseous streams to condense into a liquid state. A shell-and-tube heat exchanger comprises three chambers all fluidly connected: a distribution chamber, a main chamber, and a collection chamber. The distribution chamber comprises a gas inlet for the gaseous stream to be injected into the shell-and-tube heat exchanger. The main chamber comprises an elongated body wherein the gaseous stream may flow from the distribution chamber to the collection chamber. The main chamber comprises a plurality of cooling elements for cooling the gaseous stream. The cooling elements may have different profiles, shapes, sizes. The cooling elements may be tubes or pipes. The cooling elements may be straight tubes: such tubes are cheap since they may be installed quickly, but they may also be curved to increase their surface area within the main chamber, thus increasing their cooling effect. The cooling elements may also be U-pipes, also called U-bend pipes. U-pipes are pipes that are bend at 180° at one end. In one embodiment, the cooling elements may be pipes comprising more than one 180° bends. In one embodiment, the cooling elements comprised in the main chamber are pipes, in particular straight pipes or U-type pipes.

The geometry of the pipes influences the position of the inlet and outlet for the cooling water. For example, if the cooling elements are straight pipes or pipes comprising an even number of 180° bends, the inlet and outlet cooling water are positioned in opposite ends of the heat exchanging device, e.g. the inlet for the cooling water may be placed near the bottom of the heat exchanger and the outlet near the top of the heat exchanger. But, if the cooling elements are pipes comprising an odd number of 180° bends, the inlet and the outlet for the cooling water should be placed near the same end of the heat exchanger, which e.g. may be the top end or the bottom end of the heat exchanger, if positioned in a vertical manner.

The pipe carrying the gaseous stream to the gas inlet of the heat exchanger may be any device that is suitable to carry such a stream under the pressure and temperature required by the process. The pipe carrying the gaseous stream may be a hose, or a conduit. The pipe carrying the gaseous stream may be flexible, or rigid.

In a urea plant, processes often require a stream of cooling air to cool down liquid or solid streams. While cooling liquid or solid streams, the streams of cooling air may be contaminated with compounds contained in these streams. Ammonia and carbon dioxide are the basic compounds used to produce urea, and since they are gases as atmospheric pressure, they are easily captured by the streams of cooling air. Water vapor is another gas that is often found in air streams in a urea plant, since urea synthesis require water, and a lot of processes are carried out at high temperatures which facilitates the evaporation of liquid water into water vapor. Further, these streams are often very hot, for example their temperature may be 90-160°C, such as above 90, 95, 100, 105, 110, 115, 120, 125, 130, 135, 140, or up to 160°C. In one embodiment, the temperature of the gaseous stream is at least 110 °C, e.g. 110-160°C, or 115-140°C, in the pipe before the introduction of the portion of the condensate.

For example, a urea plant may comprise a hydrolyzer section which is responsible for cleaning aqueous waste streams. The aqueous waste streams may comprise ammonia, carbon dioxide and/or urea. The gaseous stream produced by a hydrolyzer section, in particular by a desorber comprised in the hydrolyzer section, comprise ammonia and carbon dioxide. Another potential source of gaseous streams comprising ammonia and carbon dioxide are the carbamate decomposers of a urea plant. A carbamate decomposer is a device to remove unreacted ammonium carbamate from an aqueous solution comprising urea and ammonium carbamate. In the decomposer, the aqueous solution is heated up so that ammonium carbamate decomposes into ammonia and carbon dioxide which are separated from the aqueous solution. The exiting gaseous stream of a decomposer therefore comprises ammonia, carbon dioxide and water.
In the gaseous stream, the water is in the form of water vapour due to the temperature of the stream. In chemical engineering, the term "steam" is usually used to designate water that has been heated above its boiling point and is used in a plant to carry energy. The water that is evaporated from a liquid stream into a gaseous stream is simply referred to as water or water vapor.

In one embodiment, the gaseous stream fed into the heat exchanger comprises from 5 to 15 weight%, or from 8 to 12 weight% of CO₂.

In one embodiment, the gaseous stream fed into the heat exchanger comprises from 25 to 45 weight%, or from 30 to 40 weight% of NH₃.

In one embodiment, the gaseous stream fed into the heat exchanger comprises from 45 to 65 weight%, or from 50 to 60 weight% of water.

In one embodiment, the gaseous stream fed into the heat exchanger comprises from 5 to 15 weight% of CO₂, from 25 to 45 weight% of NH₃, and from 45 to 65 weight% of water.

In one embodiment, the gaseous stream fed into the heat exchanger comprises from 8 to 12 weight% of CO₂, from 30 to 40 weight% of NH₃, and from 50 to 60 weight% of water.
The gaseous stream fed into the heat exchanger may also comprise other gases, such as nitrogen and/or oxygen gas, but they are usually present in small quantities, e.g. at most 5 weight%, at most 2 weight%, or at most 1 weight% of the gaseous stream.

Gaseous streams comprising one or more of ammonia, carbon dioxide and water have to be purified for several reasons: first recovering ammonia and carbon dioxide allows to increase the overall yield of the urea synthesis by re-injecting the ammonia and carbon dioxide to the reactor, and saves money to the plant. Secondly, there are regulations in most countries where fertilizer plants, such as urea plants, operate that limit the contaminant concentration in any streams that is rejected in the atmosphere. So, there is an important need to recover ammonia, carbon dioxide and water from gaseous streams. For example, in a urea plant, the hydrolyzer section is responsible for purifying the water streams before they may be released in the environment or re-used in the plant. During the purification steps of the water streams, polluted gaseous streams are created. These streams are then directed to a heat exchanger to condensate the water, ammonia and carbon dioxide back into a liquid condensate, which may be send back to the synthesis section of the urea plant.

Since ammonia and carbon dioxide are gases at atmospheric pressure, they cannot be condensed by simply contacting them with a cooling liquid. However, when they are in the presence of water, and the water is condensed by lowering its temperature, ammonia and carbon dioxide will solubilize in the liquid water and react together. Once they reacted, they will be immobilized in the liquid phase and not re-evaporate. When ammonia and carbon dioxide solubilize in water, they may form mainly three products: ammonium carbamate (H₂N-COONH₄), ammonium bicarbonate (NH₄HCO₃) and ammonium carbonate ((NH₄)₂CO₃). So when a gaseous stream comprising ammonia, carbon dioxide and water is cooled down in a heat exchanger, the liquid condensate recovered in the collection chamber of the heat exchanger comprises water and one or more selected from the group of ammonium carbamate, ammonium bicarbonate and ammonium carbonate. The liquid condensate may also comprise dissolved gas, such as free ammonia and/or free carbon dioxide, originating from the gaseous stream. The exact composition of the liquid condensate may depend on factors, such as the ratio of the compounds in the gaseous stream, the amount of water and the temperature of the gaseous stream. In one embodiment, the liquid condensate is an aqueous solution comprising one or more compounds selected from the group consisting of ammonium carbamate, ammonium bicarbonate, ammonium carbonate, free ammonia, free carbon dioxide, or any combination thereof.

When the heat exchanger is operating, cooling water must be directed into the inlets of the cooling elements of the heat exchanger and recovered at the outlets. The cooling water may be pure water, but it may also comprise other components or impurities, coming from the raw or unpurified water and/or from water-improving additives added to the water in order to protect the pipes or tubes where the cooling water is used, such as the cooling elements of a heat exchanger and/or other equipment storing the cooling water. Since the cooling liquid does not come in direct contact with the gaseous stream, there is no risk of contamination of the gaseous stream or the condensate by the cooling liquid. In one embodiment, the cooling liquid comprises inorganic salts, such as calcium phosphate, calcium carbonate, iron phosphate, aluminium salts, magnesium salts, or any combination thereof. Calcium phosphate may be formed due to possible additive addition of polyphosphate salts as part of the cooling water system treatment. The solubility of some salts, such as calcium phosphate, decreases when the temperature of the aqueous solution increases. Calcium phosphate and other salts may be naturally present in the water used in the plant. So, when the cooling water heats up due to the indirect contact, via the walls of the cooling elements, with the hot gaseous stream, there is a risk that some inorganic salts precipitate out of the cooling water.

It was observed that when using a conventional heat exchanging device, if the temperature of the gaseous stream fed into the heat exchanger was at least 100 °C, in particular at least 110 °C, the temperature of the cooling water at the outlet of the cooling water was at least 60 °C, or even at least 70 °C. At this temperature, the precipitation rate of solids such as calcium phosphate is increased. During a maintenance operation, the pipes for the cooling water were inspected and a significant fouling was observed.

To solve this problem, it was envisioned that lowering the temperature of the gaseous stream before it enters the heat exchanger would reduce the temperature of the cooling water in the heat exchanger and therefore decrease the precipitation rate of solids.
However, cooling the gaseous stream before it enters the heat exchanger should be done in a way that the final composition of the condensate obtained in the heat exchanger is not sensibly modified. The condensate is thus recirculated, i.e. re-injected, in the synthesis process to increase the conversion rate of the raw materials, ammonia and carbon dioxide. Therefore, it is not desirable to introduce components not naturally present in the gaseous stream, into the gaseous stream before it enters the heat exchanging device, since the additive would be re-injected in the synthesis process and would pollute the urea produced in the plant, or additional water as water is detrimental to the synthesis of urea.
It was found that it was possible to spray an amount of the liquid condensate recovered in the heat exchanger into the gaseous stream before the gaseous stream enters the heat exchanger.
The portion of the condensate to be introduced in the pipe carrying the gaseous stream is introduced as an aerosol to increase its cooling effect. By creating an aerosol, the surface of the liquid increases, the transfer of heat between the hot gaseous stream and the aerosol is improved, and the temperature of the gaseous stream decreases before entering the heat exchanger. The aerosol is provided by a means for generating an aerosol. The means for generating an aerosol may be provided in the vicinity of the inlet pipe, e.g. the means may be attached to the inlet pipe.
Injecting a portion of the condensate also means that the composition of the gaseous stream is not sensibly modified since the condensate comprises the same base components, i.e. atoms, as the gaseous stream, but in different forms and states, i.e. the gaseous stream comprises gaseous ammonia, gaseous carbon dioxide, and water vapor, whereas the condensate comprises liquid water and ammonium salts, such as ammonium carbamate, ammonium carbonate and/or ammonium bicarbonate, comprising the two other molecules, ammonia and carbon dioxide, and the condensate may optionally also comprise free ammonia and/or carbon dioxide dissolved therein. Upon the contact between the hot gaseous stream and the cooler condensate aerosol, heat exchange takes place, and the temperature of the gaseous stream decreases.

When the gaseous stream comprising ammonia, carbon dioxide and water, which has been provided with an aerosol of recirculated condensate, enters the main chamber of the heat exchanger, the temperature of the gaseous stream is decreased. When the water vapour comprised in the gaseous stream comes into contact with the cooling elements, it starts to condense into liquid water. As liquid water is formed, ammonia and carbon dioxide begin to solubilize into the liquid water. Ammonia and carbon dioxide may react to form ammonium carbamate, and carbon dioxide may react with water to form carbonic acid (H₂CO₃), and the carbonic acid may react with ammonia to form ammonium bicarbonate, ammonium carbonate and/or ammonium carbamate. As ammonia and carbon dioxide react with each other and/or water, it further drives the solubilization of the gases in the liquid water.

In the collection chamber of the heat exchanger, the formed condensate may be recovered via at least one outlet for a liquid composition. A portion of the condensate is forwarded to the pipe carrying the gaseous stream comprising ammonia, carbon dioxide and water to the heat exchanging device, in order to be introduced into the gaseous stream. The remainder of the condensate not being recirculated to the ingoing gaseous stream of the heat exchanging device may be re-used in other parts of the production process, for example the remainder of the condensate may be forwarded to another urea plant section with the aim to recover ammonia and carbon dioxide in the urea synthesis reactor comprised in the urea plant. The heat exchanger may comprise only one outlet for a liquid composition wherein the totality of the condensate is recovered, and later separated in two streams, wherein one stream is forwarded and re-injected as an aerosol to cool down the gaseous stream entering the heat exchanger and the other stream is forwarded and re-injected in the synthesis section of the urea plant. The recirculation system may also comprise an additional process step and piece of equipment to remove from the condensate residual gases still present in the condensate at the bottom of the heat exchanger. An example of such an equipment may be a liquid/vapor separator. In such a case, the condensate sprayed as an aerosol in the gaseous stream directed to the heat exchanger may be supplied by the additional piece of equipment, such as the liquid/vapor separator. The stream of condensate may be split in two streams downstream of the outlet of the device to remove gases from the condensate of the heat exchanger, one to be injected as an aerosol and the other one to be injected in the synthesis section.

In one embodiment, the method comprises the step of directing the condensate recovered in the collection chamber to a liquid/vapor separator, thereby obtaining a condensate free of dissolved gas, in particular free ammonia gas and/or carbon dioxide.

It may be an advantage for the system to comprise a pump between the source of the condensate, which may be the outlet of the heat exchanger, or the outlet of a liquid/vapor separator, and the inlet for the condensate into the gaseous stream. The pump may be used to adjust the pressure of the condensate before it is injected into the gaseous stream. It may be preferable that the pressure of the condensate is similar to the pressure of the gaseous stream, for example, the pressure of the condensate may be within a 20% deviation range from the pressure of the gaseous stream.

In one embodiment, the temperature of the gaseous stream at the gas inlet of the heat exchanger is below 100 °C. It was found that lowering the temperature of the gaseous stream below 100 °C reduces significantly the fouling in the cooling elements of the heat exchanger.

In one embodiment, the temperature of the cooling liquid at the inlet of the plurality of cooling elements is from 5 to 40°C, such as from 5 to 35 °C, from 5 to 30°C, from 10 to 40 °C, from 15 to 40 °C, from 10 to 35°C, from 15 to 35°C, from 20 to 40°C, from 20 to 35 °C, or from 20 to 30 °C. It may not be necessary to lower the temperature of the cooling water below the ambient temperature. The temperature of the cooling liquid at the inlet of the plurality of cooling elements may be from 20 to 40°C, from 20 to 35 °C, or from 20 to 30 °C. Lowering the temperature of the cooling water before it enters the heat exchanger may improve the cooling effect, however it also has a cost and it might not be required to further increase the cooling effect. Even in the case where the temperature of the stream of cooling water is above room temperature, it may not be necessary to lower the temperature of the cooling water to room temperature.

In one embodiment, the temperature of the cooling liquid at the outlet of the plurality of cooling elements is from 50 to 70°C, from 50 to 65 °C, or from 50 to 60 °C. It was found that maintaining a temperature of the cooling liquid at the outlet of the heat exchanger from 50 to 70°C decreased the fouling of the cooling elements considerably and it reached an acceptable level, such that the apparatus might require maintenance every 12 to 24 months, or 15 to 24 months, or 18 to 24 months, as opposed to every 3 to 9 months without the cooling of the gas stream fed into the heat exchanger. If the temperature of the cooling liquid is too high, there is a risk that some of the compounds comprised in the cooling liquid may precipitate, providing depositions on the inner surface of the tubes and creating fouling and obstacles for the flow of the cooling water itself, or in case of reversed construction with cooling water in the shell side of the heat exchanger, depositions on the outer surface of the tubes and creating fouling and obstacles for the heat transfer to occur sufficiently.

In one embodiment, the heat exchanger used in the method described above may comprise a gas outlet, in particular in its collection chamber to remove non-condensed gases. A heat exchanger comprising a gas outlet may function as a liquid/vapor separator in addition to the cooling/condensing function. Non-condensed gases may be removed from the heat exchanger via the gas outlet, and may be directed to another heat exchanger to be further condensed.

In one embodiment, the temperature of the portion of the condensate recovered from the at least one outlet for a liquid composition is from 15 to 60 °C, such as from 15 to 50 °C, from 20 to 60 °C, from 20 to 55 °C, from 20 to 50 °C, or from 20 to 45 °C. It may be necessary to further process the condensate obtained before introducing it in the gaseous stream. For example, the condensate may contain gases that need to be separated from the liquid condensate. Gas separation may be performed using a liquid and gas separation device. It may also be an advantage to further cool down the condensate, so that the cooling effect when sprayed into the gaseous stream is greater. Alternatively, a portion of the condensate may be taken directly from the collection chamber of the heat exchanger to the pipe carrying the gaseous stream into the gas inlet of the heat exchanger.

In one embodiment, the portion of the condensate being re-injected into the gaseous stream is introduced in the pipe at a distance from the gas inlet of the heat exchanger, e.g. it may specifically be introduced at least two meters upstream of the gas inlet of the heat exchanger. The portion of the condensate being re-injected into the gaseous stream may be introduced 2-20 meters, such as 2-10 m, or 2-5 m, upstream of the gas inlet of the heat exchanger. It was found that it may be an advantage to introduce the portion of the condensate in the gaseous stream comprising ammonia, carbon dioxide and water at least two meters before the inlet of the heat exchanger to achieve a satisfactory temperature of the gaseous stream at the inlet of the heat exchanger. If the portion of the condensate is introduced closer to the gas inlet, the stream and the aerosol do not have sufficient time to exchange heat. The distance between the gas inlet of the heat exchanger and the introduction of the condensate as an aerosol will likely depend on parameters specific for each installation, such as the velocity of the gaseous stream, the size of the pipe carrying the gaseous stream, the temperature of the gaseous stream and/or of the liquid to be introduced as an aerosol.

In one embodiment, the portion of the condensate is introduced in the pipe with a spraying nozzle. It was found that a spraying nozzle was effective at introducing the portion of the condensate in the pipe carrying the gaseous stream. In one embodiment, the portion of the condensate is introduced with a single spraying nozzle. Alternatively, the portion of the condensate may be introduced with a series of spraying nozzles, e.g. at least two or more spraying nozzles.

In one embodiment, the amount of condensate re-injected as an aerosol into the gaseous stream of the inlet pipe directed to the gas inlet of the heat exchanger is 20% to 50 wt%, such as 25 wt% to 50 wt%, 25 wt% to 35 wt%, 20 wt% to 45 wt%, or 25 wt% to 45 wt%, of the total amount (weight) of condensate recovered in the collection chamber of the heat exchanger. The amount of condensate re-injected as an aerosol may depend on different parameters of the system, such as the temperature of the gaseous stream or of the condensate, the velocity of the gaseous stream, the temperature of the cooling water, or any combination thereof.

In another aspect, the present invention provides heat exchanging device comprising a heat exchanger and a recirculation system, the heat exchanger comprising a distribution chamber, a main chamber, and a collection chamber, wherein:
- the distribution chamber comprises a gas inlet for receiving a gaseous stream comprising water, ammonia and carbon dioxide, through an inlet pipe;
- the main chamber comprises a plurality of cooling elements, wherein each cooling element comprises an inlet and an outlet for a cooling liquid;
- the collection chamber comprises at least one outlet for a liquid composition;
- the inlet pipe is adapted to be fluidly connected to the gas inlet of the heat exchanger; and
- the recirculation system comprises a fluid connection between the at least one outlet for a liquid composition of the collection chamber and the inlet pipe, and the fluid connection comprises means for generating an aerosol between the at least one outlet for a liquid composition of the collection chamber and the inlet pipe of the heat exchanger, wherein the fluid connection is configured to introduce at least a portion of the liquid composition from the liquid composition outlet of the collection chamber as an aerosol in the inlet pipe.

The recirculation system comprises a conventional heat exchanger that cools down and condensates a gaseous stream into an aqueous condensate. The heat exchanger comprises three chambers: the distribution chamber which comprises a gas inlet for receiving a gaseous stream, in particular a gaseous stream comprising water, ammonia and carbon dioxide. The gas inlet is connected to an inlet pipe which directs the gaseous stream into the heat exchanger. The distribution chamber may also comprise other elements, such as elements for distributing the gaseous stream across its cross-section.

The main chamber of the heat exchanger is connected to the distribution chamber and comprises a plurality of cooling elements, such as cooling pipes. A cooling liquid is passed through the cooling elements and absorbs heat from the gaseous stream. The cooling elements are comprised within a shell, and the gaseous stream may occupy the shell-side space.

The collection chamber is connected to the main chamber and collects the condensate formed in the main chamber due to the cooling and condensation of the gaseous stream. The collection chamber comprises at least one outlet for a liquid composition. The at least one outlet for a liquid composition is used to remove the condensate from the heat exchanger.

The recirculation system also comprises a fluid connection, e.g. a tube, a or a pipe, and means for generating an aerosol between the at least one outlet for a liquid composition of the collection chamber and the inlet pipe, wherein the fluid connection is configured to introduce a liquid composition as an aerosol in the inlet pipe. The role of the fluid connection is to re-inject part of the condensate into the inlet pipe in order to lower the temperature of the gaseous stream before it enters the heat condenser.

As explained above, lowering the temperature of the gaseous stream reduces the heat absorbed by the cooling liquid in the heat exchanger and reduces the fouling speed of the cooling elements due to precipitation of insoluble salts.

The condensate should be introduced as an aerosol in the inlet pipe to increase the contact surface between the condensate and the gaseous stream, thereby increasing the heat exchange between the two phases and providing a greater cooling effect.

It is important to introduce the condensate in the gaseous stream and not water, so that the composition of the condensate is not modified by the aerosol. Adding water as an aerosol would decrease the concentration of components of the condensate, such as ammonium carbonate or bicarbonate. A decrease in concentration is not desirable since part of the condensate is re-injected in the urea synthesis reactor, and having more water would lead to an undesirable decrease in yield in the urea synthesis of the overall process.

In one embodiment, the recirculation system according to the present disclosure may also comprise a liquid/vapor separator, the liquid/vapor separator comprising an inlet for an aqueous solution, a gas outlet, and an outlet for a liquid composition depleted of gas, in particular free ammonia and/or carbon dioxide. The fluid connection comprises the liquid/vapor separator such that the at least one outlet for a liquid composition of the collection chamber is fluidly connected to the inlet for an aqueous solution of the liquid/vapor separator and the outlet for a liquid composition is fluidly connected to the means for generating an aerosol.

It may happen that the condensate recovered in the collection chamber of the heat exchanger comprises some dissolved gases, in particular free ammonia and/or carbon dioxide. Re-injecting these dissolved gases in the gaseous stream heading into the heat exchanger is not desirable as this would modify the ratio of ammonia to carbon dioxide of the gaseous stream. Re-injecting dissolved gases in the gaseous stream would also increase the cooling effect required to condensate the same proportion of gases in the heat exchanger. So, a second equipment such as a liquid/vapor separator may be used and located between the outlet of the heat exchanger and the means for injecting a liquid composition as an aerosol into the inlet pipe. The outlet for a liquid composition of the heat exchanger is fluidly connected to the inlet of the liquid/vapor separator, so that the whole condensate produced by the heat exchanger is directed to the liquid/vapor separator.

The liquid/vapor separator may have different designs as known in the art, but they will always comprise an inlet for a liquid composition, a gas outlet, and an outlet for a liquid composition depleted of gas, in particular free ammonia and/or carbon dioxide. The composition of liquid removed from the separator is identical to the condensate produced by the heat exchanger except that it does not contain any dissolved gas. The liquid can then be split in portions, and one portion of the liquid , i.e. one portion of the condensate, may be introduced into the inlet pipe connected to the inlet of the heat exchanger as an aerosol to lower the temperature of the gaseous stream.

In another aspect, the present invention provides a method for revamping a heat exchanger, comprising the step of fluidly connecting the at least one outlet for a liquid composition of the collection chamber with the gas inlet of the distribution chamber with a fluid connection wherein the fluid connection comprises a means for generating an aerosol, and the fluid connection is configured to introduce a liquid composition as an aerosol in the inlet pipe.

In another aspect, the present disclosure provides a method for modifying a heat exchanger comprising a distribution chamber, a main chamber and a collection chamber, wherein the distribution chamber comprises a gas inlet, the main chamber comprises a plurality of cooling elements, wherein each cooling element comprises an inlet and an outlet for a cooling liquid, the collection chamber comprises at least one outlet for a liquid composition; and an inlet pipe is fluidly connected to the gas inlet of the heat exchanger, comprising the step of fluidly connecting the at least one outlet for a liquid composition of the collection chamber with the inlet pipe connected to the gas inlet of the distribution chamber with a fluid connection wherein the fluid connection comprises a means for generating an aerosol, and the fluid connection is configured to introduce at least a portion of the liquid composition from the collection chamber as an aerosol in the inlet pipe, thereby obtaining a heat exchanger according to the present disclosure.

It was found out that the method according to the present disclosure could be applied to an existing heat exchanger condensing a gaseous stream comprising ammonia, carbon dioxide and water. A new fluid connection should be installed between the at least one outlet for a liquid composition of the collection chamber and the gas inlet of the distribution chamber. The fluid connection should comprise a means for generating an aerosol, and the fluid connection is configured to introduce a liquid composition as an aerosol in the inlet pipe. The fluid connection allows to cool down the gaseous stream entering the heat exchanger without modifying the composition of the condensate obtained in the collection chamber of the heat exchanger. The lower temperature of the gaseous stream reduces the risk of fouling the cooling elements of the heat exchanger.

In another aspect, a method for revamping a system comprising a heat exchanger and a liquid/vapor separator, comprising the step of fluidly connecting the outlet of the liquid/vapor separator with the gas inlet of the heat exchanger with a fluid connection wherein the fluid connection comprises a means for generating an aerosol, and the fluid connection is configured to introduce a liquid composition as an aerosol in the inlet pipe.

In another aspect, the present disclosure provides a method for modifying a system comprising a heat exchanging device including a heat exchanger and a liquid/vapor separator, the heat exchanger comprising a distribution chamber, a main chamber and a collection chamber, wherein the distribution chamber comprises a gas inlet, the main chamber comprises a plurality of cooling elements, wherein each cooling element comprises an inlet and an outlet for a cooling liquid, the collection chamber comprises at least one outlet for a liquid composition; and an inlet pipe is fluidly connected to the gas inlet of the heat exchanger, wherein the liquid/vapor separator comprises a liquid inlet, a gas outlet and a liquid outlet, the at least one outlet for a liquid composition of the heat exchanger being connected to the liquid inlet of the liquid/vapor separator, the method comprising the step of fluidly connecting the liquid outlet of the liquid/vapor separator with the inlet pipe connected to a gas inlet of the heat exchanger with a fluid connection, wherein the fluid connection comprises a means for generating an aerosol, and the fluid connection is configured to introduce at least a portion of the liquid composition from the liquid outlet of the liquid/vapor separator as an aerosol in the inlet pipe.

The revamping method as described above can also be applied to a recirculation system that comprises a liquid/vapor separator. The new fluid connection is installed between the outlet of the separator and the gas inlet of the heat exchanger.

In another aspect, the present disclosure also provides the use of a heat exchanging device according to the present disclosure in a urea manufacturing plant.

In another aspect, the present disclosure also provides the use of a heat exchanging device according to the present disclosure for reducing fouling in the cooling elements of the heat exchanger comprised in the heat exchanging device.

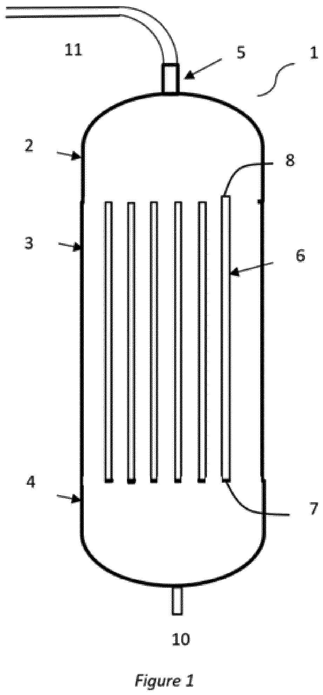

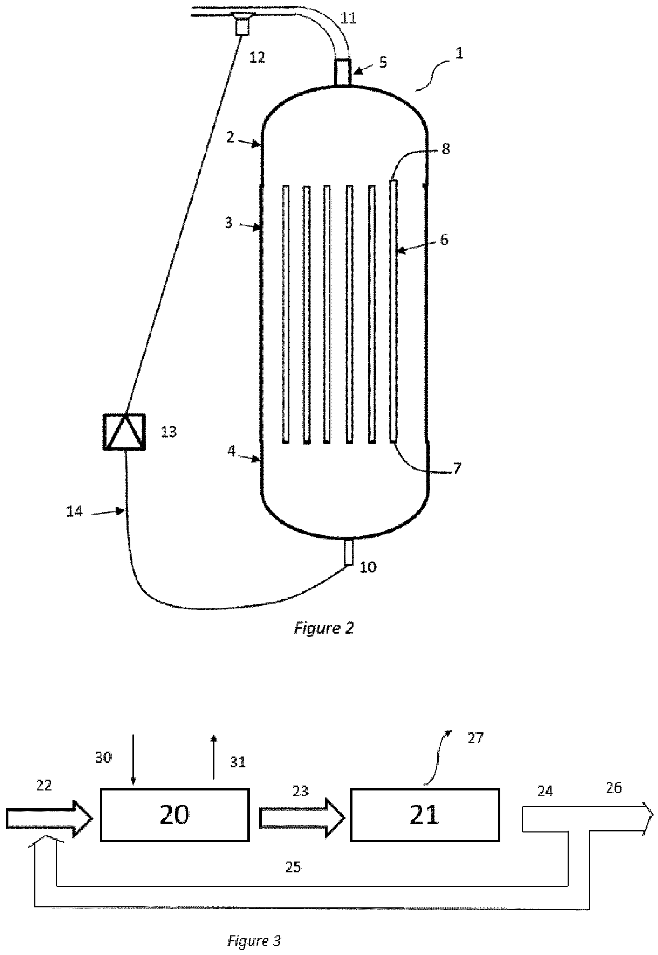

In the following, the method of the invention will be explained by referring to Figures 1 and 2, which are here to be contemplated as exemplary embodiments and a general flow chart of the process.

Figure 1 represents a conventional heat exchanger present in a urea plant. The heat exchanger 1 comprises a gas inlet 5, a distribution chamber 2, a main chamber 3 comprising cooling elements 6, i.e. a plurality of straight pipes. The cooling elements 6 have an inlet 7 and an outlet 8. Each pipe of the plurality of pipes comprises an inlet 7 and an outlet 8 for a cooling liquid. To simplify the drawings, only one outlet and one outlet of a pipe is represented on Figure 1. Naturally, other configurations could be applied within the scope of the invention, e.g. a joint inlet and outlet for the cooling elements which are divided between the pipes. The heat exchanger 1 comprises a collection chamber **4** comprising an outlet for a liquid composition **10.** The gas inlet is fluidly connected to a pipe **11** for carrying a gaseous stream. The outlet **10** is fluidly connected to a pump **13** and further to a spraying nozzle **12** located along pipe **11** and about two meters from the gas inlet **5** of the heat exchanger.

The heat exchanger **1** was receiving a gaseous stream at a temperature from 112 to 116 °C containing carbon dioxide, ammonia and water in its gas inlet **5.** For example, the gaseous stream may contain from 8 to 12 weight% of CO₂, from 30 to 40 weight% of NH₃, and from 50 to 60 weight% of water. The gaseous stream entered the distribution chamber **2** and spread out in the chamber **2.** The stream entered the main chamber **3** contacting the plurality of pipes **6.** A cooling liquid comprising water and inorganic salts, e.g. salts of calcium, magnesium, iron, aluminium, or any combination thereof, was directed into the inlets **7** of the pipes. After 6 - 9 months of operation, it was noted that the temperature of the cooling liquid at the outlet **8** was 99°C instead of a recommended value of 45 - 55 °C. The heat exchanger was inspected, and it was noted that 60 to 70% of the pipes were blocked by a solid composition, which composition mainly comprised phosphate and carbonate salts.

Figure 2 represents with a heat exchanging device comprising a heat exchanger and a recirculation system according to the present invention, suitable for use in a urea plant. The method according to the present disclosure was implemented by recovering 25 to 50% of the condensate leaving the heat exchanger via outlet **10** and introducing it in pipe **11** via the spraying nozzle **12.** The temperature of the gaseous stream at the gas inlet **5** was measured to be about 90 - 100 °C. Furthermore, it was observed that the temperature of the cooling liquid at the outlet 8 was 55°C. A much lower rate of precipitation is expected under these conditions.

Figure 3 represents a process according to the present disclosure in a urea-producing plant. A gaseous stream **22** comprising water, ammonia, and carbon dioxide is subjected to a heat exchanging process **20** in a heat exchanger. The gaseous stream **22** is condensed, providing a liquid condensate stream **23** comprising a compound selected from the group consisting of ammonium bicarbonate, ammonium carbonate, ammonium carbamate, and mixtures thereof. The liquid condensate stream **23** may also comprise free ammonia and/or carbon dioxide. A stream of cooling water **30** is used in the heat exchanging process **20** and a stream of heated cooling water **31** is produced. The liquid condensate stream **23** is directed to a liquid/vapor separation step **21,** in a liquid/vapor separator. In the liquid/vapor separation step **21,** free ammonia and/or carbon dioxide is removed from the liquid stream **23** as gas stream **27.** Such devices are well known in the art, and their function is to remove any gas from liquid streams. The liquid stream **24** collected from the liquid/vapor separation step **21** has been degassed and is free of dissolved gas, i.e. free ammonia and/or carbon dioxide. The degassed liquid stream **24** may be separated into two sub-streams, **25** and **26.** A portion of the degassed liquid stream **24,** namely the sub-stream **26,** may be re-injected in the synthesis section of the urea plant. Another portion of the degassed liquid stream **24,** namely the sub-stream **25** may be recirculated and sprayed as an aerosol into the gaseous stream **22** to lower the temperature of the gaseous stream **22** before it enters the heat exchanging process **20** and is subjected to condensation. In the heat exchanging process **20,** ingoing cooling water **30** comprising inorganic salts absorbs heat from the gaseous stream **22,** providing a heated cooling water stream **31** exiting the heat exchanging process **20.** The heated cooling water stream **31** may contain less inorganic salts than ingoing cooling water stream **30** due to precipitation but the precipitation is lowered and limited by using the recycling of the substream **25.**

## Claims

1. A method for reducing fouling of cooling elements of a heat exchanger (1) comprising a distribution chamber (2), a main chamber (3) and a collection chamber (4), wherein the distribution chamber comprises a gas inlet (5), the main chamber comprises a plurality of cooling elements (6), wherein each cooling element comprises an inlet (7) and an outlet (8) for a cooling liquid, and the collection chamber comprises at least one outlet for a liquid composition (10), the method comprising the steps:
a) directing a gaseous stream comprising water, ammonia, and carbon dioxide in the gas inlet (5) of the distribution chamber via an inlet pipe (11);
b) directing a cooling liquid comprising water to one or more inlets (7) of the cooling elements and recovering the cooling liquid at one or more outlets (8) thereof;
c) in the main chamber (3), condensing the gaseous stream into a condensate;
d) recovering the condensate from the at least one outlet (10) for a liquid composition of the collection chamber (4); and **characterized by**
e) introducing a portion of the condensate recovered in step d) as an aerosol through the inlet pipe (11) into the gaseous stream, thereby lowering the temperature of the gaseous stream.

2. Method according to claim 1, wherein the portion of the condensate is essentially free of dissolved gas.

3. Method according to claim 1 or 2, before step e) directing the condensate recovered in step d) to a liquid/vapor separator, thereby obtaining a condensate free of dissolved gas, in particular free ammonia gas and/or carbon dioxide.

4. Method according to claim 1 or 2, wherein the temperature of the gaseous stream is at least 110 °C, in the inlet pipe (11) before the introduction of the portion of the condensate recovered.

5. Method according to any one of claims 1 to 3, wherein the temperature of the gaseous stream at the gas inlet (5) of the heat exchanger is below 110 °C.

6. Method according to any one of claims 1 to 5, wherein the temperature of the cooling liquid at the outlet (8) of the plurality of cooling elements is from 50 to 70 °C, in particular from 50 to 60 °C.

7. Method according to any one of claims 1 to 6, wherein the condensate is an aqueous solution comprising a compound selected from the group consisting of ammonium bicarbonate, ammonium carbonate, ammonium carbamate, or any combinations thereof.

8. Method according to any one of claims 1 to 7, wherein the cooling elements are pipes, in particular straight pipes.

9. Method according to any one of claims 1 to 8, wherein the temperature of the portion of the condensate to be injected in the inlet pipe (11) is from 15 to 60 °C, in particular from 20 to 45 °C.

10. Method according to any one of claims 1 to 9, wherein the portion of the condensate is introduced in the inlet pipe (11) with a spraying nozzle (12).

11. A heat exchanging device comprising a recirculation system and a heat exchanger (1),
the heat exchanger (1) comprising
- a gas inlet (5) for receiving a gaseous stream comprising water, ammonia and carbon dioxide, through an inlet pipe (11);
- at least one outlet (10) for a liquid composition;
- a plurality of cooling elements (6), wherein each cooling element (6) comprises an inlet for a cooling liquid (7) and an outlet for a cooling liquid (8);
- the inlet pipe (11) is adapted to be fluidly connected to the gas inlet (5) of the heat exchanger (1); and
the recirculation system comprising a fluid connection (14) between the at least one outlet (10) for a liquid composition and the inlet pipe (11 ), and the fluid connection comprising means (12) for generating an aerosol between the at least one outlet (10) for a liquid composition and the inlet pipe (11), wherein the fluid connection (14) is configured to introduce at least a portion of the liquid composition of the at least one outlet of the heat exchanger as an aerosol in the inlet pipe (11), the heat exchanger (1) further comprising a distribution chamber (2), a main chamber (3), and a collection chamber (4), wherein:
- the distribution chamber (2) comprises the gas inlet (5) for receiving a gaseous stream comprising water, ammonia, and carbon dioxide, through the inlet pipe (11);
- the main chamber (3) comprises the plurality of cooling elements (6), wherein each cooling element (6) comprises said inlet for a cooling liquid (7) and said outlet for a cooling liquid (8);
- the collection chamber (4) comprises said at least one outlet (10) for a liquid composition; **characterized in that**
- the recirculation system comprises the fluid connection (14) between the at least one outlet (10) for a liquid composition of the collection chamber and the inlet pipe (11 ) and the fluid connection comprises said means (12) for generating an aerosol between the at least one outlet (10) for a liquid composition of the collection chamber and the inlet pipe (11), and **in that** the fluid connection (14) is configured to introduce said at least a portion of the liquid composition of the at least one outlet of the collection chamber of the heat exchanger as an aerosol in the inlet pipe (11).

12. The heat exchanging device according to claim 11, further comprising a liquid/vapor separator, the liquid/vapor separator comprising an inlet for an aqueous solution, a gas outlet, and an outlet for a liquid composition depleted of gas, in particular free ammonia and/or carbon dioxide, wherein the fluid connection comprises the liquid/vapor separator such that the at least one outlet (10) for a liquid composition of the collection chamber (4) is fluidly connected to the inlet for an aqueous solution of the liquid/vapor separator and the outlet for a liquid composition is fluidly connected to the means (12) for generating an aerosol.

13. A method for modifying a heat exchanger (1) comprising a distribution chamber (2), a main chamber (3) and a collection chamber (4), wherein the distribution chamber comprises a gas inlet (5), the main chamber comprises a plurality of cooling elements (6), wherein each cooling element comprises an inlet (7) and an outlet (8) for a cooling liquid, the collection chamber (4) comprises at least one outlet for a liquid composition (10); and an inlet pipe (11) is fluidly connected to the gas inlet (5) of the heat exchanger (1), **characterized by** the step of fluidly connecting the at least one outlet (10) for a liquid composition of the collection chamber (4) with the inlet pipe (11) connected to a the gas inlet (5) of the distribution chamber (2) with a fluid connection (14) wherein the fluid connection (14) comprises a means (12) for generating an aerosol, and the fluid connection (14) is configured to introduce at least a portion of the liquid composition from the collection chamber (4) as an aerosol in the inlet pipe (11).

14. A method for modifying a system comprising a heat exchanging device including a heat exchanger (1) and a liquid/vapor separator, the heat exchanger (1) comprising a distribution chamber (2), a main chamber (3) and a collection chamber (4), wherein the distribution chamber comprises a gas inlet (5), the main chamber comprises a plurality of cooling elements (6), wherein each cooling element comprises an inlet (7) and an outlet (8) for a cooling liquid, the collection chamber (4) comprises at least one outlet for a liquid composition (10); and an inlet pipe (11) is fluidly connected to the gas inlet (5) of the heat exchanger (1), wherein the liquid/vapor separator comprises a liquid inlet, a gas outlet and a liquid outlet, the at least one outlet for a liquid composition of the heat exchanger being connected to the liquid inlet of the liquid/vapor separator, the method comprising the step of fluidly connecting the liquid outlet of the liquid/vapor separator with the inlet pipe (11) with a fluid connection (14), **characterized in that** the fluid connection (14) comprises a means (12) for generating an aerosol, and the fluid connection (14) is configured to introduce at least a portion of the liquid composition from the liquid outlet of the liquid/vapor separator as an aerosol in the inlet pipe (11).

## Patentansprüche

1. Verfahren zum Reduzieren von Fouling von Kühlelementen eines Wärmetauschers (1), der eine Verteilungskammer (2), eine Hauptkammer (3) und eine Sammelkammer (4) umfasst, wobei die Verteilungskammer einen Gaseinlass (5) umfasst, die Hauptkammer eine Vielzahl von Kühlelementen (6) umfasst, wobei jedes Kühlelement einen Einlass (7) und einen Auslass (8) für eine Kühlflüssigkeit umfasst, und die Sammelkammer mindestens einen Auslass für eine flüssige Zusammensetzung (10) umfasst, wobei das Verfahren die folgenden Schritte umfasst:
a) Leiten eines gasförmigen Stroms, der Wasser, Ammoniak und Kohlendioxid umfasst, in den Gaseinlass (5) der Verteilungskammer über ein Einlassrohr (11);
b) Leiten einer Kühlflüssigkeit, die Wasser umfasst, zu einem oder mehreren Einlässen (7) der Kühlelemente und Rückgewinnen der Kühlflüssigkeit an einem oder mehreren Auslässen (8) davon;
c) Kondensieren des gasförmigen Stroms in der Hauptkammer (3) zu einem Kondensat;
d) Rückgewinnen des Kondensats aus dem mindestens einen Auslass (10) für eine flüssige Zusammensetzung der Sammelkammer (4); und **gekennzeichnet durch**
e) Einbringen eines Anteils des in Schritt d) zurückgewonnenen Kondensats als Aerosol durch das Einlassrohr (11) in den Gasstrom, wodurch die Temperatur des Gasstroms gesenkt wird.

2. Verfahren nach Anspruch 1, wobei der Anteil des Kondensats im Wesentlichen frei von gelöstem Gas ist.

3. Verfahren nach Anspruch 1 oder 2, vor Schritt e) Leiten des in Schritt d) zurückgewonnenen Kondensats zu einem Flüssig/Dampf-Abscheider, wodurch ein Kondensat erhalten wird, das frei von gelöstem Gas, insbesondere freiem Ammoniakgas und/oder Kohlendioxid ist.

4. Verfahren nach Anspruch 1 oder 2, wobei die Temperatur des gasförmigen Stroms in dem Einlassrohr (11) vor dem Einbringen des zurückgewonnenen Kondensats mindestens 110 °C beträgt.

5. Verfahren nach einem der Ansprüche 1 bis 3, wobei die Temperatur des gasförmigen Stroms an dem Gaseinlass (5) des Wärmetauschers unter 110 °C liegt

6. Verfahren nach einem der Ansprüche 1 bis 5, wobei die Temperatur der Kühlflüssigkeit an dem Auslass (8) der Vielzahl von Kühlelementen 50 bis 70 °C, insbesondere 50 bis 60 °C beträgt.

7. Verfahren nach einem der Ansprüche 1 bis 6, wobei das Kondensat eine wässrige Lösung ist, die eine Verbindung ausgewählt aus der Gruppe bestehend aus Ammoniumbicarbonat, Ammoniumcarbonat, Ammoniumcarbamat oder beliebigen Kombinationen davon umfasst.

8. Verfahren nach einem der Ansprüche 1 bis 7, wobei die Kühlelemente Rohre, insbesondere gerade Rohre sind.

9. Verfahren nach einem der Ansprüche 1 bis 8, wobei die Temperatur des Anteils des Kondensats, der in das Einlassrohr (11) injiziert werden soll, 15 bis 60 °C, insbesondere 20 bis 45 °C beträgt.

10. Verfahren nach einem der Ansprüche 1 bis 9, wobei der Anteil des Kondensats mit einer Sprühdüse (12) in das Einlassrohr (11) eingebracht wird.

11. Wärmetauschvorrichtung, die ein Umwälzsystem und einen Wärmetauscher (1) umfasst, wobei der Wärmetauscher (1) umfasst:
- einen Gaseinlass (5) zur Aufnahme eines gasförmigen Stroms, der Wasser, Ammoniak und Kohlendioxid umfasst, durch ein Einlassrohr (11);
- mindestens einen Auslass (10) für eine flüssige Zusammensetzung;
- eine Vielzahl von Kühlelementen (6), wobei jedes Kühlelement (6) einen Einlass für eine Kühlflüssigkeit (7) und einen Auslass für eine Kühlflüssigkeit (8) umfasst;
- wobei das Einlassrohr (11) eingerichtet ist, um mit dem Gaseinlass (5) des Wärmetauschers (1) fluidverbunden zu werden; und
wobei das Umwälzsystem eine Fluidverbindung (14) zwischen dem mindestens einen Auslass (10) für eine flüssige Zusammensetzung und dem Einlassrohr (11) umfasst, und wobei die Fluidverbindung Mittel (12) zum Erzeugen eines Aerosols zwischen dem mindestens einen Auslass (10) für eine flüssige Zusammensetzung und dem Einlassrohr (11) umfasst, wobei die Fluidverbindung (14) dazu ausgelegt ist, mindestens einen Anteil der flüssigen Zusammensetzung des mindestens einen Auslasses des Wärmetauschers als Aerosol in das Einlassrohr (11) einzubringen, wobei der Wärmetauscher (1) ferner eine Verteilungskammer (2), eine Hauptkammer (3), und eine Sammelkammer (4) umfasst, wobei:
- die Verteilungskammer (2) den Gaseinlass (5) zur Aufnahme eines gasförmigen Stroms, der Wasser, Ammoniak und Kohlendioxid umfasst, durch das Einlassrohr (11) umfasst;
- die Hauptkammer (3) die Vielzahl von Kühlelementen (6) umfasst, wobei jedes Kühlelement (6) den Einlass für eine Kühlflüssigkeit (7) und den Auslass für eine Kühlflüssigkeit (8) umfasst;
- die Sammelkammer (4) den mindestens einen Auslass (10) für eine flüssige Zusammensetzung umfasst; **dadurch gekennzeichnet, dass**
- das Umwälzsystem die Fluidverbindung (14) zwischen dem mindestens einen Auslass (10) für eine flüssige Zusammensetzung der Sammelkammer und dem Einlassrohr (11) umfasst, und die Fluidverbindung die Mittel (12) zum Erzeugen eines Aerosols zwischen dem mindestens einen Auslass (10) für eine flüssige Zusammensetzung der Sammelkammer und dem Einlassrohr (11) umfasst, und dass die Fluidverbindung (14) dazu ausgelegt ist, den mindestens einen Anteil der flüssigen Zusammensetzung des mindestens einen Auslasses der Sammelkammer des Wärmetauschers als Aerosol in das Einlassrohr (11) einzubringen.

12. Wärmetauschvorrichtung nach Anspruch 11, ferner umfassend einen Flüssig/Dampf-Abscheider, wobei der Flüssig/Dampf-Abscheider einen Einlass für eine wässrige Lösung, einen Gasauslass, und einen Auslass für eine flüssige Zusammensetzung umfasst, die an Gas, insbesondere freiem Ammoniak und/oder Kohlendioxid, abgereichert ist, wobei die Fluidverbindung den Flüssig/Dampf-Abscheider umfasst, so dass der mindestens eine Auslass (10) für eine flüssige Zusammensetzung der Sammelkammer (4) mit dem Einlass für eine wässrige Lösung des Flüssig/Dampf-Abscheiders fluidverbunden ist, und der Auslass für eine flüssige Zusammensetzung mit den Mitteln (12) zur Erzeugung eines Aerosols fluidverbunden ist.

13. Verfahren zum Modifizieren eines Wärmetauschers (1), der eine Verteilungskammer (2), eine Hauptkammer (3) und eine Sammelkammer (4) umfasst, wobei die Verteilungskammer einen Gaseinlass (5) umfasst, die Hauptkammer eine Vielzahl von Kühlelementen (6) umfasst, wobei jedes Kühlelement einen Einlass (7) und einen Auslass (8) für eine Kühlflüssigkeit umfasst, die Sammelkammer (4) mindestens einen Auslass für eine flüssige Zusammensetzung (10) umfasst; und ein Einlassrohr (11) mit dem Gaseinlass (5) des Wärmetauschers (1) fluidverbunden ist, **gekennzeichnet durch** den Schritt des Fluidverbindens des mindestens einen Auslasses (10) für eine flüssige Zusammensetzung der Sammelkammer (4) mit dem Einlassrohr (11), das mit einem Gaseinlass (5) der Verteilungskammer (2) verbunden ist, mit einer Fluidverbindung (14), wobei die Fluidverbindung (14) ein Mittel (12) zum Erzeugen eines Aerosols umfasst, und die Fluidverbindung (14) dazu ausgelegt ist, mindestens einen Anteil der flüssigen Zusammensetzung aus der Sammelkammer (4) als Aerosol in das Einlassrohr (11) einzubringen.

14. Verfahren zum Modifizieren eines Systems, das eine Wärmetauschvorrichtung umfasst, die einen Wärmetauscher (1) und einen Flüssig/Dampf-Abscheider einschließt, wobei der Wärmetauscher (1) eine Verteilungskammer (2), eine Hauptkammer (3) und eine Sammelkammer (4) umfasst, wobei die Verteilungskammer einen Gaseinlass (5) umfasst, die Hauptkammer eine Vielzahl von Kühlelementen (6) umfasst, wobei jedes Kühlelement einen Einlass (7) und einen Auslass (8) für eine Kühlflüssigkeit umfasst, die Sammelkammer (4) mindestens einen Auslass für eine flüssige Zusammensetzung (10) umfasst; und ein Einlassrohr (11) mit dem Gaseinlass (5) des Wärmetauschers (1) fluidverbunden ist, wobei der Flüssig/Dampf-Abscheider einen Flüssigkeitseinlass, einen Gasauslass und einen Flüssigkeitsauslass umfasst, wobei der mindestens eine Auslass für eine flüssige Zusammensetzung des Wärmetauschers mit dem Flüssigkeitseinlass des Flüssig/Dampf-Abscheiders verbunden ist, wobei das Verfahren den Schritt des Fluidverbindens des Flüssigkeitsauslasses des Flüssig/Dampf-Abscheiders mit dem Einlassrohr (11) mit einer Fluidverbindung (14) umfasst, **dadurch gekennzeichnet, dass** die Fluidverbindung (14) ein Mittel (12) zum Erzeugen eines Aerosols umfasst, und die Fluidverbindung (14) dazu ausgelegt ist, mindestens einen Anteil der flüssigen Zusammensetzung aus dem Flüssigkeitsauslass des Flüssig/Dampf-Abscheiders als Aerosol in das Einlassrohr (11) einzubringen.

## Revendications

1. Procédé pour réduire l'encrassement d'éléments de refroidissement d'un échangeur de chaleur (1) comprenant une chambre de distribution (2), une chambre principale (3) et une chambre de collecte (4), où la chambre de distribution comprend une entrée de gaz (5), la chambre principale comprend une pluralité d'éléments de refroidissement (6), où chaque élément de refroidissement comprend une entrée (7) et une sortie (8) pour un liquide de refroidissement, et la chambre de collecte comprend au moins une sortie pour une composition liquide (10), le procédé comprenant les étapes consistant à :
a) diriger un flux gazeux comprenant de l'eau, de l'ammoniac et du dioxyde de carbone dans l'entrée de gaz (5) de la chambre de distribution via un tuyau d'entrée (11) ;
b) diriger un liquide de refroidissement comprenant de l'eau vers une ou plusieurs entrées (7) des éléments de refroidissement et récupérer le liquide de refroidissement au niveau d'une ou de plusieurs sorties (8) de ceux-ci ;
c) dans la chambre principale (3), condenser le flux gazeux en un condensat ;
d) récupérer le condensat provenant de l'au moins une sortie (10) pour une composition liquide de la chambre de collecte (4) ; et **caractérisé par** les étapes consistant à :
e) introduire une partie du condensat récupéré à l'étape d) sous la forme d'un aérosol à travers le tuyau d'entrée (11) dans le flux gazeux, abaissant ainsi la température du flux gazeux.

2. Procédé selon la revendication 1, où la partie du condensat est essentiellement exempte de gaz dissous.

3. Procédé selon la revendication 1 ou 2, avant l'étape e), diriger le condensat récupéré à l'étape d) vers un séparateur liquide/vapeur, ce qui permet d'obtenir un condensat exempt de gaz dissous, en particulier d'ammoniac gazeux libre et/ou de dioxyde de carbone.

4. Procédé selon la revendication 1 ou 2, où la température du flux gazeux est d'au moins 110 °C dans le tuyau d'entrée (11) avant l'introduction de la partie du condensat récupéré.

5. Procédé selon l'une quelconque des revendications 1 à 3, où la température du flux gazeux à l'entrée de gaz (5) de l'échangeur de chaleur est inférieure à 110 °C.

6. Procédé selon l'une quelconque des revendications 1 à 5, où la température du liquide de refroidissement à la sortie (8) de la pluralité d'éléments de refroidissement est de 50 à 70 °C, en particulier de 50 à 60 °C.

7. Procédé selon l'une quelconque des revendications 1 à 6, où le condensat est une solution aqueuse comprenant un composé choisi dans le groupe constitué par le bicarbonate d'ammonium, le carbonate d'ammonium, le carbamate d'ammonium ou toute combinaison de ceux-ci.

8. Procédé selon l'une quelconque des revendications 1 à 7, où les éléments de refroidissement sont des tuyaux, en particulier des tuyaux droits.

9. Procédé selon l'une quelconque des revendications 1 à 8, où la température de la partie du condensat à injecter dans le tuyau d'entrée (11) est de 15 à 60 °C, en particulier de 20 à 45 °C.

10. Procédé selon l'une quelconque des revendications 1 à 9, où la partie du condensat est introduite dans le tuyau d'entrée (11) avec une buse de pulvérisation (12).

11. Dispositif d'échange de chaleur comprenant un système de recirculation et un échangeur de chaleur (1), l'échangeur de chaleur (1) comprenant
- une entrée de gaz (5) pour recevoir un flux gazeux comprenant de l'eau, de l'ammoniac et du dioxyde de carbone, à travers un tuyau d'entrée (11) ;
- au moins une sortie (10) pour une composition liquide ;
- une pluralité d'éléments de refroidissement (6), où chaque élément de refroidissement (6) comprend une entrée pour un liquide de refroidissement (7) et une sortie pour un liquide de refroidissement (8) ;
- le tuyau d'entrée (11) est adapté pour être relié fluidiquement à l'entrée de gaz (5) de l'échangeur de chaleur (1) ; et
le système de recirculation comprenant une liaison fluidique (14) entre l'au moins une sortie (10) pour une composition liquide et le tuyau d'entrée (11), et la liaison fluidique comprenant des moyens (12) pour générer un aérosol entre l'au moins une sortie (10) pour une composition liquide et le tuyau d'entrée (11), où la liaison fluidique (14) est configurée pour introduire au moins une partie de la composition liquide de l'au moins une sortie de l'échangeur de chaleur sous la forme d'un aérosol dans le tuyau d'entrée (11), l'échangeur de chaleur (1) comprenant en outre une chambre de distribution (2), une chambre principale (3) et une chambre de collecte (4), où :
- la chambre de distribution (2) comprend l'entrée de gaz (5) pour recevoir un flux gazeux comprenant de l'eau, de l'ammoniac et du dioxyde de carbone, à travers le tuyau d'entrée (11) ;
- la chambre principale (3) comprend la pluralité d'éléments de refroidissement (6), où chaque élément de refroidissement (6) comprend ladite entrée pour un liquide de refroidissement (7) et ladite sortie pour un liquide de refroidissement (8) ;
- la chambre de collecte (4) comprend ladite au moins une sortie (10) pour une composition liquide ; **caractérisé en ce que**
- le système de recirculation comprend la liaison fluidique (14) entre l'au moins une sortie (10) pour une composition liquide de la chambre de collecte et le tuyau d'entrée (11), et la liaison fluidique comprend ledit moyen (12) pour générer un aérosol entre l'au moins une sortie (10) pour une composition liquide de la chambre de collecte et le tuyau d'entrée (11), et **en ce que** la liaison fluidique (14) est configurée pour introduire ladite au moins une partie de la composition liquide de l'au moins une sortie de la chambre de collecte de l'échangeur de chaleur sous la forme d'un aérosol dans le tuyau d'entrée (11).

12. Dispositif d'échange de chaleur selon la revendication 11, comprenant en outre un séparateur liquide/vapeur, le séparateur liquide/vapeur comprenant une entrée pour une solution aqueuse, une sortie de gaz et une sortie pour une composition liquide appauvrie en gaz, en particulier en ammoniac libre et/ou en dioxyde de carbone, où la liaison fluidique comprend le séparateur liquide/vapeur de telle sorte que l'au moins une sortie (10) pour une composition liquide de la chambre de collecte (4) est reliée fluidiquement à l'entrée pour une solution aqueuse du séparateur liquide/vapeur et la sortie pour une composition liquide est reliée fluidiquement au moyen (12) pour générer un aérosol.

13. Procédé pour modifier un échangeur de chaleur (1) comprenant une chambre de distribution (2), une chambre principale (3) et une chambre de collecte (4), où la chambre de distribution comprend une entrée de gaz (5), la chambre principale comprend une pluralité d'éléments de refroidissement (6), où chaque élément de refroidissement comprend une entrée (7) et une sortie (8) pour un liquide de refroidissement, la chambre de collecte (4) comprend au moins une sortie pour une composition liquide (10) ; et un tuyau d'entrée (11) est relié fluidiquement à l'entrée de gaz (5) de l'échangeur de chaleur (1), **caractérisé par** l'étape consistant à relier fluidiquement l'au moins une sortie (10) pour une composition liquide de la chambre de collecte (4) au tuyau d'entrée (11) relié à une entrée de gaz (5) de la chambre de distribution (2) avec une liaison fluidique (14), où la liaison fluidique (14) comprend un moyen (12) pour générer un aérosol, et la liaison fluidique (14) est configurée pour introduire au moins une partie de la composition liquide provenant de la chambre de collecte (4) sous la forme d'un aérosol dans le tuyau d'entrée (11).

14. Procédé pour modifier un système comprenant un dispositif d'échange de chaleur incluant un échangeur de chaleur (1) et un séparateur liquide/vapeur, l'échangeur de chaleur (1) comprenant une chambre de distribution (2), une chambre principale (3) et une chambre de collecte (4), où la chambre de distribution comprend une entrée de gaz (5), la chambre principale comprend une pluralité d'éléments de refroidissement (6), où chaque élément de refroidissement comprend une entrée (7) et une sortie (8) pour un liquide de refroidissement, la chambre de collecte (4) comprend au moins une sortie pour une composition liquide (10) ; et un tuyau d'entrée (11) est relié fluidiquement à l'entrée de gaz (5) de l'échangeur de chaleur (1), où le séparateur liquide/vapeur comprend une entrée de liquide, une sortie de gaz et une sortie de liquide, l'au moins une sortie pour une composition liquide de l'échangeur de chaleur est reliée à l'entrée de liquide du séparateur liquide/vapeur, le procédé comprenant l'étape consistant à relier fluidiquement la sortie de liquide du séparateur liquide/vapeur au tuyau d'entrée (11) avec une liaison fluidique (14), **caractérisé en ce que** la liaison fluidique (14) comprend un moyen (12) pour générer un aérosol, et la liaison fluidique (14) est configurée pour introduire au moins une partie de la composition liquide provenant de la sortie de liquide du séparateur liquide/vapeur sous la forme d'un aérosol dans le tuyau d'entrée (11).
